# EUROPÄISCHE PATENTSCHRIFT

(11) **EP 0 306 908 B1**
(45) Veröffentlichungstag und Bekanntmachung des Hinweises auf die Patenterteilung: **29.12.1993**
(21) Anmeldenummer: 88114561.9
(22) Anmeldetag: 07.09.1988
(51) Int. Cl.: G07C 5/12

(54) **Fahrtschreiber für Kraftfahrzeuge**
Tachograph for motor vehicles
Tachygraphe pour véhicules automobiles

(30) Priorität: 09.09.1987 DE 3730215
(43) Veröffentlichungstag der Anmeldung: 15.03.1989
(73) Patentinhaber: Moto Meter AG, D-71229 Leonberg (DE)
(72) Erfinder:
(74) Vertreter: Behrens, Ralf Holger, Dipl.-Phys.

(56) Entgegenhaltungen:
- EP-A- 0 176 676
- DE-A- 2 917 329
- LU-A- 68 042
- US-A- 3 000 687
- US-A- 3 434 152

## Beschreibung

Die Erfindung betrifft einen Fahrtschreiber für Kraftfahrzeuge nach dem Oberbegriff des Patentanspruchs 1.

Ein Fahrtschreiber dieser Art ist in der älteren deutschen Patentanmeldung entsprechend DE-A1-36 26 996.4 beschrieben. Dabei umfaßt die Einrichtung zum Abheben der Schreibstifte von der Diagrammscheibe einen Hebel, der von der in die Kammer eingeschwenkten Trägerplatte betätigt wird.

Aus der US-A-3434152 ist ein Fahrtschreiber bekannt, bei welchem die Diagrammscheibe auf einem mit der Tür aus einem Gehäuse ausschwenkbaren Diagrammscheibenträger angeordnet ist und die Gehäusetür mittels eines an der Gehäusetür angebrachten Schlosses verschließbar ist. Durch das Öffnen des Schlosses kann der Diagrammscheibenträger mit der Diagrammscheibe abgesenkt und demzufolge von den Schreibstiften getrennt werden und beim Schließen des Schlosses kommen die Diagrammscheibe und die Schreibstifte wieder miteinander in Berührung. Das Schloß ist jedoch an der ausschwenkbaren Gehäusetür vorgesehen, was bei ausgeschwenkter Gehäusetür aus Platzgründen störend sein kann; außerdem erfordern die Betätigung des Schlosses und das Ausschwenken der Gehäusetür getrennte Bewegungen, d. h., die Drehbetätigung des Schlosses führt nicht zwangsweise auch zu einem Ausschwenken der Gehäusetür.

Der Erfindung liegt die Aufgabe zugrunde, einen gattungsgemäßen Fahrtschreiber zu entwickeln, bei dem das Abheben und Absenken der Schreibstifte sowie das Verschwenken der Diagrammträgerplatte vereinfacht ist.

Diese Aufgabe wird erfindungsgemäß durch die kennzeichnenden Merkmale des Patentanspruchs 1 gelöst.

Die nachstehende Beschreibung einer bevorzugten Ausführungsform der Erfindung dient im Zusammenhang mit beiliegender Zeichnung der weiteren Erläuterung. Es zeigen:
- Figur 1: eine Schnittansicht eines Fahrtschreibers mit ausgeschwenktem Diagrammscheibenträger;
- Figur 2: eine Ansicht in Richtung des Pfeiles A in Fig. 1;
- Figur 3: eine Ansicht ähnlich Fig. 2 mit eingeschwenktem Diagrammscheibenträger und
- Figur 4: eine Abwandlung gegenüber Fig. 3.

Ein auf der Zeichnung dargestellter Fahrtschreiber 1 für Kraftfahrzeuge weist ein Gehäuse 2 auf, an dessen Vorderseite eine durchsichtige Frontscheibe 3 angeordnet ist. Im Gehäuse 2 sind in herkömmlicher Weise Meßinstrumente, beispielsweise Geschwindigkeitsmesser, Wegstreckenzähler, Zeituhr angeordnet.

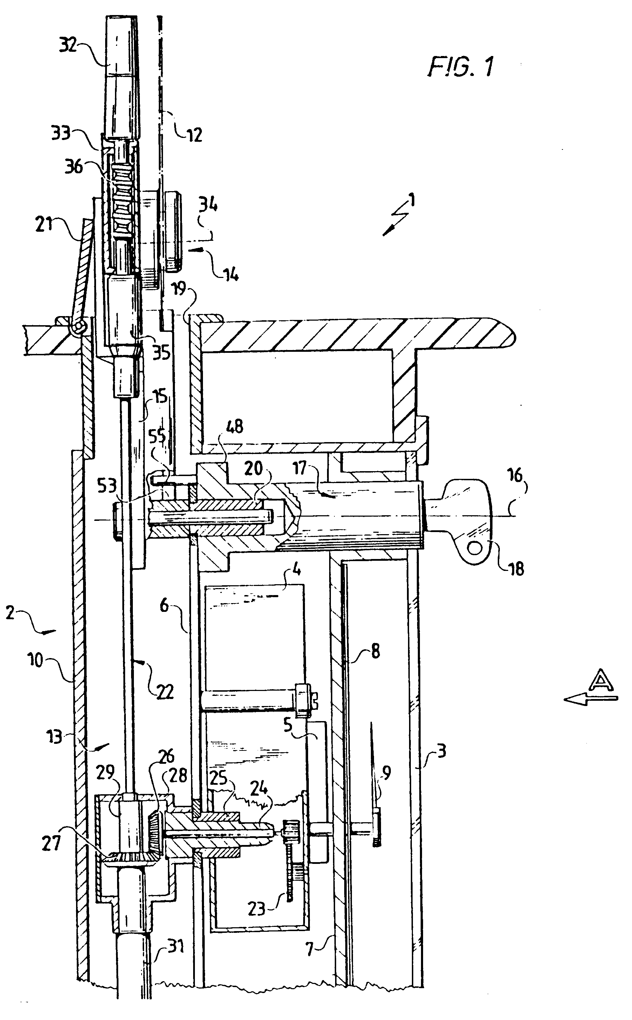

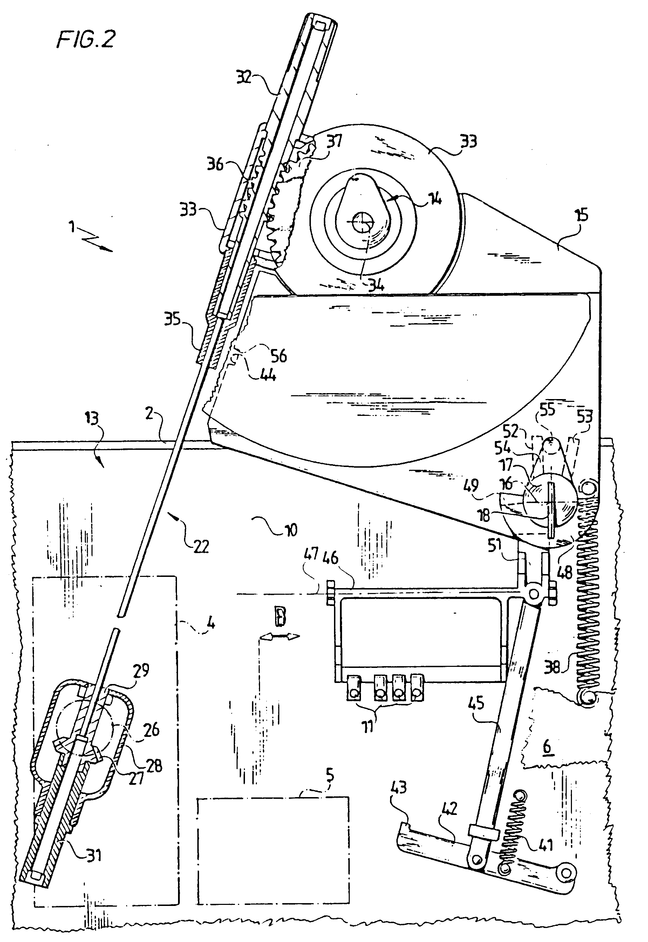

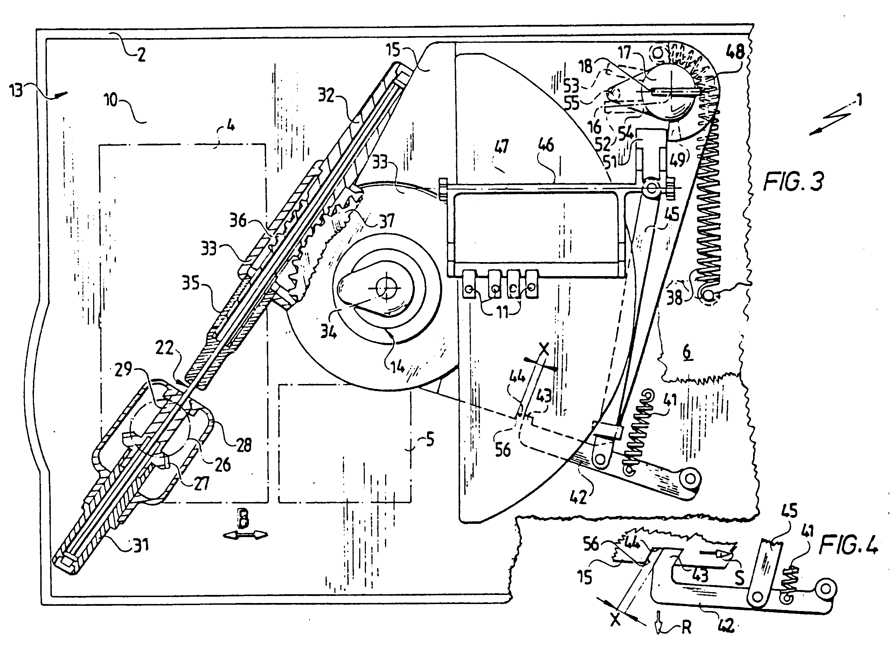

In Figur 1, 2 und 3 sind eine Zeituhr 4 und ein Geschwindigkeitsmesser 5 schematisch angedeutet. Die Meßinstrumente, z. B. die Zeituhr 4 sind an einer im Inneren des Gehäuses befindlichen Platine 6 festgeschraubt. In einem Raum zwischen der Frontplatte 3 und einer weiteren Gehäusewand 7 ist mit letzterer verbunden ein aus mehreren Einzelzifferblättern für die einzelnen Meßinstrumente bestehendes Zifferblatt 8 vorgesehen, über welchem Zeiger 9 spielen, die ihrerseits von den einzelnen Meßinstrumenten, beispielsweise der Zeituhr 4, angetrieben sind. Die Meßinstrumente treiben ferner in ebenfalls an sich bekannter und daher nicht eigens dargestellter Weise Schreibstifte 11 (Figur 2 und 3) an, die der Aufzeichnung von Meßwerten auf einer später noch zu beschreibenden, drehend angetriebenen Diagrammscheibe 12 (Figur 1) dienen.

In Gehäuse 2 ist eine Kammer 13 vorgesehen, die von der Platine 6 und einer Gehäuserückwand 10 begrenzt ist und im Betriebszustand des Fahrtschreibers (Figur 3) einen die Diagrammscheibe 12 festspannenden Diagrammscheibenträger 14 aufnimmt. Der Diagrammscheibenträger 14 ist drehbar auf einer Trägerplatte 15 gelagert, die um eine Drehachse 16 schwenkbar im Gehäuse 2 derart gelagert ist, daß sie im Betriebszustand des Fahrtschreibers gemeinsam mit dem Diagrammscheibenträger 14 in die Kammer 13 einschwenkbar und im Außer-Betriebszustand des Fahrtschreibers nach oben aus dem Fahrtschreiber 1 herausschwenkbar ist, um so einen Diagrammscheibenwechsel vornehmen zu können. Im Gehäuse 2 ist um die Achse 16 drehbar ein Schloß 17 angeordnet, welches durch einen Schlüssel 18 so betätigt werden kann, daß es um die Achse 16 schwenkbar ist. Die Trägerplatte 15 ist mit einem Schloßkörper 20 des Schlosses 17 verbunden, so daß sie sich nach Betätigung des Schlüssels 18 und Verdrehen des Schloßkörpers 20 zusammen mit diesem verschwenkt.

Wie aus Figur 1 ersichtlich, weist das Gehäuse 2 an seiner Oberseite einen Schlitz 19 mit Klappdeckel 21 auf, durch welchen der Diagrammscheibenträger 14 mit der Diagrammscheibe 12 aus dem Gehäuse 2 herausbewegbar ist. Beim Wiedereinschwenken des Diagrammscheibenträgers 14 in das Gehäuse 2 schließt sich der Deckel 21 automatisch.

Wie aus Figur 1 ersichtlich, treibt ein übliches, dem Antrieb des Minutenzeigers der Zeituhr 4 dienendes Wechselrad 23 unmittelbar eine Welle 24 zeitgenau an, die mittels einer Buchse 25 im Gehäuse 2 drehbar gelagert ist. Das in die Kammer 13 vorstehende Ende der Welle 24 trägt ein Kegelrad 26, das mit einem weiteren Kegelrad 27 kämmt. Die Drehachse des Kegelrades 27 verläuft dabei quer, nämlich senkrecht zur Drehachse (Welle 24) des Kegelrades 26. Das Kegelrad 26 bildet ein Ausgangsrad der Zeituhr 4, das Kegelrad 27 wirkt als Zwischenrad.

Um die Buchse 25 und damit um die Welle 24 ist drehbar ein erster Gehäuseteil 28 gelagert, welcher der Drehlagerung des Kegelrades 27 dient. Hierzu weist dieses eine beidseits verlängerte Nabe 29 auf, die einerseits im Gehäuseteil 28 und andererseits in einer fest mit dem Gehäuseteil 28 verbundenen Büchse 31 drehend gelagert ist. Somit kann das Kegelrad 27 gemeinsam mit dem Gehäuseteil 28 verschwenkt werden, wobei das Kegelrad 27 auf dem Kegelrad 26 abläuft. Nabe 29 und Buchse 31 sind hohl ausgebildet und nehmen axial gleitverschieblich das eine Ende einer Teleskopstange 22 auf.

Die Teleskopstange 22 ist mit ihrem anderen Ende in einer weiteren Buchse 32 axial gleitverschieblich, die an einem zweiten Gehäuseteil 33 drehbar gelagert ist. Der zweite Gehäuseteil 33 ist seinerseits um die Drehachse 34 des Diagrammscheibenträgers 14 schwenkbar. Wie dargestellt, ist die Buchse 32 an ihrem unteren Ende fest mit einer weiteren Buchse 35 verbunden, die sich zusammen mit der Buchse 32 im zweiten Gehäuseteil 33 dreht. Die Querschnittsfläche der Teleskopstange 22 ist von polygonaler, beispielsweise quadratischer, Form. Die Hohlräume in der Nabe 29 und der Buchse 35 sind von komplementärer Gestalt, so daß diese Teile 29 und 35 drehschlüssig, jedoch gleitverschieblich mit der Teleskopstange 22 verbunden sind. Hierdurch wird das vom Ausgangsrad (Kegelrad 26) vermittelte Drehmoment der Zeituhr 4 auf den Diagrammscheibenträger 14 übertragen. Die axiale Gleitverschieblichkeit der Teleskopstange in Nabe 29, Buchse 31, Buchse 32 sowie Buchse 35 ermöglicht dabei ohne Beeinträchtigung dieses Drehmoments das Verschwenken der Trägerplatte 15 mit Diagrammscheibenträger 14, wobei sich die beiden Gehäuseteile 28 und 33 in entsprechender Weise um die Welle 25 bzw. die Drehachse 34 verschwenken.

Ein mittlerer Teil der Buchse 32 (Figur 2 und 3) ist als Schnecke 36 ausgebildet und steht in unmittelbarem Eingriff mit einem Schneckenrad 37, welches im zweiten Gehäuseteil 33 um die Achse 34 drehbar gelagert ist und die Diagrammscheibenaufnahme 14 unmittelbar trägt. Das Schneckenrad 37 ist somit das direkte Antriebsrad des Diagrammscheibenträgers 14.

Wie aus Figur 2 und 3 hervorgeht, ist eine Schraubenzugfeder 38 einerseits an der Platine 6 des Gehäuses 2 und andererseits an der Trägerplatte 15 befestigt und außerdem über eine übliche Führungskurve geführt. Die Feder 38 spannt die Trägerplatte in die ausgeschwenkte Stellung vor. Eine von einer Feder 41 vorgespannte Klinke 42, die mit einer Nase 43 in eine Kerbe 44 der Trägerplatte eingreift, hält letztere im eingeschwenkten Zustand fest (Figur 3).

Die bereits erwähnten Schreibstifte 11 sitzen - in Richtung des Doppelpfeiles B gleitverschieblich und zusätzlich axial (senkrecht zur Zeichnungsebene der Fig. 2) verschieblich - auf einem nicht dargestellten, an sich bekannten Schlitten. Eine Wippe 46 ist um eine Achse 47 derart verschwenkbar, daß die Schreibstifte 11 axial von der mit dem Diagrammscheibenträger 14 verbundenen Diagrammscheibe 12 abgehoben oder auf die Scheibe abgesenkt werden können. In Figur 2 (ausgeschwenkte Position der Trägerplatte 15) sind die Schreibstifte 11 von der (nicht dargestellten) Diagrammscheibe 12 abgehoben, in Figur 3 sitzen die Schreibstifte 11 unter der Wirkung von Federn mit ihren Schreibspitzen auf der (ebenfalls nicht dargestellten) Diagrammscheibe 12 auf. Die Wippe 46 ist durch die Feder 41 und über die Klinke 42 sowie eine zwischen dieser und der Wippe 46 angeordneten Kupplungsstange 45 in diejenige Position vorgespannt, in welcher die Schreibstifte 11 von ihren Federn frei gegen die Diagrammscheibe 12 gedrückt werden.

Mit dem nach entsprechender Betätigung des Schlüssels 18 verdrehbaren Schloßkörper 20 ist drehschlüssig eine Nockenscheibe 48 verbunden, die an ihrem freien Ende eine (zur Zeichnungsebene von Figur 2 und 3 geneigte) Schrägfläche 49 aufweist. Diese Schrägfläche 49 wirkt mit einem von der Wippe 46 abstehenden Arm 51 in der Weise zusammen, daß beim Auftreffen der Schrägfläche auf den Arm 51, was durch Verdrehen des Schlüssels 18 erfolgt, die Wippe 46 um die Achse 47 verschwenkt wird und hierdurch die Schreibstifte 11 von der Diagrammscheibe 12 abhebt. Solange die Schrägfläche 49 und anschließend die Fläche der Nockenscheibe 48 über dem Arm 51 liegt, sind die Schreibstifte abgehoben.

Von der Trägerplatte 15 stehen zwei Stege 52, 53 ab, zwischen die mit geringem Spiel ein über eine Schwinge 54 drehfest mit dem Schloßkörper 20 verbundener Stift 55 eingreift. Über diesen Stift wird die Trägerplatte beim Drehen des Schlüssels 18 um die Achse 16 mitverschwenkt. In der Betriebsstellung des Fahrtschreibers hält die Zugfeder 38 die Trägerplatte 15 vorgespannt gegen die Nase 43 der Klinke 42. Soll ausgehend von dieser Betriebslage die Trägerplatte 15 aus ihrer Kammer 13 herausgeschwenkt werden, wird der Schloßkörper 20 durch entsprechende Verdrehung des Schlüssels 18 aus der Stellung gemäß Fig. 3 um einen kleinen Winkelbetrag verdreht. Dabei löst sich der Stift 55 vom Steg 52 und legt sich an den Steg 53 an. Bereits bei dieser kleinen Bewegung drückt die Schrägfläche 49 auf den Arm 51 und hebt hierdurch die Schreibstifte 11 von der Diagrammscheibe 12 ab. Wird nunmehr beim Weiterverdrehen des Schlüssels 18 die Trägerplatte 15 und von dieser die Diagrammscheibe 12 mitgenommen, entsteht auf dieser keine Schreibspur, da die Stifte 11 abgehoben sind. Bei der umgekehrt verlaufenden Einschwenkbewegung der Trägerplatte 15 in ihre Kammer 13 greift der Stift 55 am Steg 52 der Trägerplatte 15 an und verschwenkt diese in die Kammer 13 zurück, worauf sich die Schreibstifte auf die Diagrammscheibe absenken, sobald der Arm 51 von der Nockenscheibe 48 freikommt und die Klinke 42 mit ihrer Nase 43 in die Kerbe 44 an der Trägerplatte 15 einfällt.

Bei in der Kammer 13 befindlicher Trägerplatte 15 müssen also mit dem Schlüssel 18 nacheinander zwei Bewegungen ausgeführt werden, nämlich eine erste Bewegung, durch welche die Wippe 46 so verschwenkt wird, daß die Schreibstifte 11 abheben, und eine zweite Bewegung, die zum Ausschwenken der Trägerplatte 15 aus der Kammer 13 führt. Bei der beschriebenen Ausführungsform ist die erste Schlüsselbewegung eine erste Drehbewegung um die Schloßachse 16 und die zweite Schlüsselbewegung eine zweite Drehbewegung in Richtung der ersten Drehbewegung.

Wie insbesondere aus Figur 3 hervorgeht, ist die Haltekerbe 44 der Trägerplatte 15 geringfügig größer als die Haltenase 43 an der Klinke 42. Hierdurch ist dann, wenn die Nase 43 in die Kerbe 44 eingerastet ist, noch eine kleine Bewegung der Trägerplatte 15 und der auf ihr angeordneten Diagrammscheibe 12 relativ zu den Schreibstiften möglich. Dies wird zur Anbringung einer Öffnungsmarkierung durch die Schreibstifte auf der Diagrammscheibe ausgenutzt, d. h. zu einer zeitbezogenen Markierung auf der Diagrammscheibe, die anzeigt, ob und zu welcher Zeit der Diagrammscheibenträger 15 aus seiner Kammer 13 herausgeschwenkt, der Fahrtschreiber also "geöffnet" wurde.

Wenn, wie aus Figur 3 entnehmbar, die Trägerplatte 15 durch Verdrehen des Schlüssels 18 in ihre eingeschwenkte Lage verschwenkt ist, liegt die in Figur 3 mit 56 bezeichnete Kante der Haltekerbe 44 an der gegenüberliegenden Kante der Haltenase 43 an. Wenn anschließend der Schlüssel 18 freigegeben wird, zieht die Zugfeder 38 die Halteplatte 15 in die in Figur 3 dargestellte Lage. Es findet also eine kleine Relativbewegung zwischen der Trägerplatte 15 und der auf ihr gelagerten Diagrammscheibe 12 relativ zu den Schreibstiften 11 statt. Da die Schreibstifte in dieser Endposition der Trägerplatte 15 bereits auf der Diagrammscheibe aufsitzen, entsteht als Öffnungsmarkierung an jeder Schreibstiftspitze ein kleiner, quer zur normalen Schreibspur gerichteter Strich, der Teil eines um die Drehachse 16 des Schlosses 15 geschlagenen Kreisbogens ist.

Bei der dargestellten Ausführungsform eines Fahrtschreibers müssen mit dem Schlüssel 18 hintereinander zwei gleichgerichtete Drehbewegungen ausgeführt werden, um zunächst die Schreibstifte 11 von der Diagrammscheibe 12 abzuheben und anschließend die Diagrammscheibe zusammen mit der Trägerplatte 15 aus dem Fahrtschreibergehäuse 2 herauszubewegen. Bei einer anderen, nicht dargestellten Ausführungsform der Erfindung kann die Abhebung der Schreibstifte von der Diagrammscheibe auch durch eine translatorische, parallel zur Schloßachse 16 erfolgende Bewegung des Schlüssels 18 bewirkt werden. Beispielsweise kann hierzu der Schlüssel in eine erste Rastlage axial in das Schloß eingesteckt werden. Danach löst eine weitere, zur Einsteckbewegung parallele Bewegung des Schlüssels in eine zweite Rastlage über entsprechende mechanische Verbindungsglieder die Abhebung der Schreibstifte 11, beispielsweise das Verschwenken der Wippe 46 aus.

Bei den bisher beschriebenen Ausführungsformen erfolgt das Abheben der Schreibstifte 11 und das Verschwenken der Trägerplatte 15 unmittelbar durch entsprechende Bewegungen des Schlüssels 18, welche die betreffenden Bewegungen der Stifte 11 und der Trägerplatte 15 mechanisch auslösen. Bei anderen Ausführungsformen der Erfindung können die Einrichtung zum Abheben der Schreibstifte von der Diagrammscheibe (Wippe 46) und die Trägerplatte 15 von elektromagnetischen Antriebselementen, beispielsweise Elektromagneten oder Elektromotoren mit entsprechenden Ein- und Ausschaltkontakten angetrieben werden, wobei die Schaltkontakte dann durch die Bewegungen des Schlüssels betätigbar sind, um hierdurch die gewünschten Bewegungen der Schreibstifte 11 und der Trägerplatte 15 auszulösen.

Die Fig. 4 zeigt eine gegenüber Fig. 3 abgewandelte Form der Klinke 42. In Fig. 4 ist die Nase 43 der Klinke 42 hakenförmig abgewinkelt und greift in eine komplementär abgewinkelte Kerbe 44 der Trägerplatte 15 ein. Hierdurch wird beim Verschwenken der Klinke 42 in Pfeilrichtung R die Trägerplatte 15 zwangsläufig in Pfeilrichtung S verschwenkt und eine Öffnungsmarkierung entsprechend der oben im Zusammenhang mit Fig. 3 beschriebenen Öffnungsmarkierung erzeugt. Entsprechendes gilt im Falle der Fig. 4 auch für das Einfallen der Nase 43 in die Kerbe 44.

## Patentansprüche

1. Fahrtschreiber für Kraftfahrzeuge mit einem Gehäuse (2), mit im Gehäuse (2) angeordneten Meßinstrumenten, einschließlich Geschwindigkeitsmesser (5) und Zeituhr (4), wobei die Meßinstrumente Zifferblätter (8) und Zeiger (9) umfassen und Schreibstifte (11) antreiben, mit einer schwenkbar am Gehäuse (2) gelagerten Trägerplatte (15), mit einem drehbar auf der Trägerplatte (15) gelagerten, von der Zeituhr (4) drehend angetriebenen Diagrammscheibenträger (14) zum Festspannen wenigstens einer Diagrammscheibe (12), auf der im Betriebszustand des Fahrtschreibers von den Schreibstiften (11) Meßwerte aufgezeichnet werden, wobei der Diagrammscheibenträger (14) mit der Trägerplatte (15) im Betriebszustand des Fahrtschreibers in einer separaten, zu den Zifferblättern (8) räumlich versetzten Kammer (13) des Gehäuses (2) angeordnet und im Außer-Betriebszustand mit der Trägerplatte (15) aus dem Gehäuse (2) herausschwenkbar ist, mit einer Einrichtung (46) zum Abheben der Schreibstifte (11) von der Diagrammscheibe (12) vor dem Herausschwenken der Trägerplatte (15) aus dem Gehäuse (2) und mit einem durch einen abnehmbaren Schlüssel (18) betätigten Schloß (17) zum Feststellen der Trägerplatte (15) in der Kammer (13) **dadurch gekennzeichnet**, daß das Schloß (17) fest am Gehäuse (2) angeordnet und ein im Schloß (17) durch den Schlüssel (18) verdrehbarer Schloßkörper (20, 54, 55) drehschlüssig mit der schwenkbaren Trägerplatte (15) verbunden ist, daß bei in der Kammer (13) befindlicher Trägerplatte (15) mit dem Schlüssel (18) nacheinander zwei Bewegungen ausführbar sind, nämlich eine erste Bewegung, welche die Einrichtung (46) zum Abheben der Schreibstifte (11) von der Diagrammscheibe (12) betätigt und eine zweite Bewegung zum Ausschwenken der Trägerplatte (15) aus der Kammer (13), wobei die zweite Bewegung eine Drehbewegung ist.

2. Fahrtschreiber nach Anspruch 1, dadurch gekennzeichnet, daß die erste Bewegung des Schlüssels (18) eine erste Drehbewegung um die Schloßachse (16) und die zweite Bewegung des Schlüssels eine zweite Drehbewegung in Richtung der ersten Drehbewegung ist.

3. Fahrtschreiber nach Anspruch 1, dadurch gekennzeichnet, daß die erste Bewegung des Schlüssels (18) eine translatorische parallel zur Schloßachse (16) und die zweite Bewegung des Schlüssels eine Drehbewegung um die Schloßachse ist.

4. Fahrtschreiber nach Anspruch 1, dadurch gekennzeichnet, daß die Bewegungen des Schlüssels (18) das Abheben der Schreibstifte (11) bzw. Verschwenken der Trägerplatte (15) direkt mechanisch auslösen.

5. Fahrtschreiber nach Anspruch 1, dadurch gekennzeichnet, daß die Einrichtung zum Abheben der Schreibstifte (11) von der Diagrammscheibe (12) und die Trägerplatte (15) von elektromagnetischen Antriebselementen mit Schaltkontakten angetrieben und die Schaltkontakte durch die Bewegungen des Schlüssels (18) betätigbar sind.

6. Fahrtschreiber nach Anspruch 1, dadurch gekennzeichnet, daß die Einrichtung zum Abheben der Schreibstifte (11) der Diagrammscheibe (12) eine schwenkbar gelagerte Wippe (46) umfaßt, die an den Schreibstiften (11) angreift, und daß von der Wippe (46) ein Arm (51) absteht, der so an einer mit dem Schloß (17) verbundenen Nocke (48, 49) anliegt, daß bei Verdrehung des Schlosses durch den Schlüssel (18) die Wippe (46) kippt und die Schreibstifte (11) von der Diagrammscheibe (12) abgehoben bzw. auf diese abgesenkt werden.

7. Fahrtschreiber nach Anspruch 6, dadurch gekennzeichnet, daß die Wippe (46) durch eine Feder (41) in die Absenkstellung der Schreibstifte (11) vorgespannt ist.

8. Fahrtschreiber nach Anspruch 7, dadurch gekennzeichnet, daß zum Verriegeln der Trägerplatte (15) in der Kammer (13) eine Klinke (42) vorgesehen ist, die über eine Kupplungsstange (45) mit dem Arm der Wippe (51) verbunden ist und beim Absenken der Schreibstifte (11) auf die Diagrammscheibe (12) mit einer Haltenase (43) in eine Haltekerbe (44) der Trägerplatte (15) einrastet.

9. Fahrtschreiber nach Anspruch 8, dadurch gekennzeichnet, daß die Haltekerbe (44) geringfügig größer als die Haltenase (43) ausgebildet ist und hierdurch in eingerasteter Stellung eine kleine Bewegung der Trägerplatte (15) und der auf ihr angeordneten Diagrammscheibe (12) relativ zu den Schreibstiften (11) ermöglicht, die zur Anbringung einer Öffnungsmarkierung durch die Schreibstifte auf der Diagrammscheibe führt.

10. Fahrtschreiber nach Anspruch 1, dadurch gekennzeichnet, daß die Trägerplatte (15) durch eine Feder (38) in ihre ausgeschwenkte Stellung vorgespannt ist.

## Claims

1. Tachograph for motor vehicles, having a housing (2), having measuring instruments, including speedometer (5) and clock (4), disposed in the housing (2), the measuring instruments comprising dial faces (8) and needles (9) and driving recording styli (11), having a carrier plate (15) mounted so that it can swivel on the housing (2), having a chart carrier (14), mounted rotatably on the carrier plate (15) and rotationally driven by the clock (4), for clamping in place at least one diagram chart (12), on which, in the operating state of the tachograph, measured values are recorded by the recording styli (11), the chart carrier (14) with the carrier plate (15), in the operating state of the tachograph, being disposed in a separate chamber (13) of the housing (2), disposed spatially offset relative to the dial faces (8), and in the non-operating state, being able to be swivelled with the carrier plate (15) out of the housing (2), having a device (46) for raising the recording styli (11) from the diagram chart (12) prior to the carrier plate (15) swivelling out of the housing (2) and having a lock (17), actuated by a removable key (18), for securing the carrier plate (15) in the chamber (13), characterized in that the lock (17) is disposed fixedly on the housing (2) and a lock element (20, 54, 55), which can be turned in the lock (17) by the key (18), is connected in a rotationally locking manner to the swivellable carrier plate (15), in that when the carrier plate (15) is located in the chamber (13), two successive movements can be executed with the key (18), namely a first movement which actuates the device (46) for raising the recording styli (11) from the diagram chart (12) and a second movement for swivelling the carrier plate (15) out of the chamber (13), the second movement being a rotational movement.

2. Tachograph according to Claim 1, characterized in that the first movement of the key (18) is a first rotational movement about the lock axis (16) and the second movement of the key is a second rotational movement in the direction of the first rotational movement.

3. Tachograph according to Claim 1, characterized in that the first movement of the key (18) is a translatory movement parallel to the lock axis (16) and the second movement of the key is a rotational movement about the lock axis.

4. Tachograph according to Claim 1, characterized in that the movements of the key (18) mechanically directly trigger the raising of the recording styli (11) or the pivoting of the carrier plate (15).

5. Tachograph according to Claim 1, characterized in that the device for raising the recording styli (11) from the diagram chart (12) and the carrier plate (15) are driven by electromagnetic drive elements having switching contacts and the switching contacts can be actuated by the movements of the key (18).

6. Tachograph according to Claim 1, characterized in that the device for raising the recording styli (11) from the diagram chart (12) comprises a swivellably mounted rocker (46), which acts upon the recording styli (11), and in that projecting from the rocker (46) is an arm (51) which bears in such a way against a cam (48, 49) connected to the lock (17) that, when the lock is turned by the key (18), the rocker (46) tilts and the recording styli (11) are raised from the diagram chart (12) or lowered onto the latter.

7. Tachograph according to Claim 6, characterized in that the rocker (46) is pretensioned by a spring (41) into the lowered position of the recording styli (11).

8. Tachograph according to Claim 7, characterized in that a latch (42) is provided for the locking of the carrier plate (15) in the chamber (13), which latch is connected via a coupling rod (45) to the rocker arm (51) and, when the recording styli (11) are lowered onto the diagram chart (12), catch-locks, by virtue of a retaining boss (43), into a retaining notch (44) on the carrier plate (15).

9. Tachograph according to Claim 8, characterized in that the retaining notch (44) is configured slightly larger than the retaining boss (43) and, in the catch-locked position, a small movement of the carrier plate (15) and of the thereon disposed diagram chart (12) relative to the recording styli (11) is thereby made possible, which movement results in an opening marking being applied by the recording styli to the diagram chart.

10. Tachograph according to Claim 1, characterized in that the carrier plate (15) is pretensioned by a spring (38) into its swivelled-out position.

## Revendications

1. Tachygraphe pour véhicules automobiles, comprenant un boîtier (2) contenant des instruments de mesure y compris un compteur de vitesse (5) et une horloge (4), les instruments de mesure ayant des cadrans (8) et des aiguilles (9) et entraînant des tiges d'écriture (11), avec une plaque de support (15) montée basculante sur le boîtier (2), un support de disque d'enregistrement (14) monté à rotation sur la plaque de support (15) et entraîné en rotation par l'horloge (4) pour fixer au moins un disque d'enregistrement (12) sur lequel les tiges d'écriture (11) inscrivent les grandeurs de mesure correspondant à l'état de fonctionnement du tachygraphe, le support de disque d'enregistrement (14) étant logé avec la plaque de support (15) dans une chambre (13) du boîtier (2), séparé, décalé dans l'espace par rapport aux cadrans (8), lorsque le tachygraphe est en mode de fonctionnement, et qui peut être basculé hors du boîtier (2) avec la plaque de support (15) lorsqu'elle est en mode de non fonctionnement, une installation (46) pour soulever les tiges d'écriture (11) par rapport au disque d'enregistrement (12) avant que la plaque de support ne soit basculée hors du boîtier (2), et une serrure (17) qui peut s'actionner avec une clé (18) amovible pour fixer la plaque de support (15) dans la chambre (13),
tachygraphe caractérisé en ce que la serrure (17) est solidaire du boîtier (2) et un organe de serrure (24, 54, 55) solidaire en rotation dans la serrure (17) avec la clé (18) est relié à la plaque de support (15) basculante, la plaque de support (15) et la clé (18) exécutant successivement deux mouvements dans la chambre (13) à savoir un premier mouvement qui actionne l'installation (46) pour soulever la tige d'écriture (11) par rapport au disque d'écriture (12) et un second mouvement pour basculer la plaque de support (15) hors de la chambre (13), ce second mouvement étant un mouvement de rotation.

2. Tachygraphe selon la revendication 1, caractérisé en ce que le premier mouvement de la clé (18) est un premier mouvement de rotation autour de l'axe (16) de la serrure, le second mouvement de la clé étant un second mouvement de rotation en direction du premier mouvement de rotation.

3. Tachygraphe selon la revendication 1, caractérisé en ce le premier mouvement de la clé (18) est un mouvement de translation, parallèle à l'axe de la serrure (16) et le second mouvement de la clé est un mouvement de rotation autour de l'axe de la serrure.

4. Tachygraphe selon la revendication 1, caractérisé en ce que les mouvements de la clé (18) déclenchent le soulèvement des tiges d'écriture (11) ou le basculement de la plaque de support (15) directement de manière mécanique.

5. Tachygraphe selon la revendication 1, caractérisé en ce que le moyen pour soulever les tiges d'écriture (11) par rapport au disque d'enregistrement (12), et la plaque de support (15) par rapport aux éléments d'entraînement électromécanique sont entraînés par des contacts de commutation, et ces derniers sont actionnés par les mouvements de la clé (18).

6. Tachygraphe selon la revendication 1, caractérisé en ce que le moyen pour soulever les tiges d'écriture (11) par rapport au disque d'enregistrement (12) comprend un balai (46) monté basculant qui attaque les tiges d'écriture (11), et un bras (51) est en saillie par rapport au balai (46), ce bras s'appliquant contre une came (48, 49) reliée à la serrure (17) de sorte que lorsqu'on fait tourner la serrure par la clé (18), le balai (46) bascule et les tiges d'écriture (11) sont soulevées ou abaissées par rapport au disque d'enregistrement (12).

7. Tachygraphe selon la revendication 6, caractérisé en ce que le balai (46) est précontraint en position d'abaissement des tiges d'écriture (11) par un ressort (41).

8. Tachygraphe selon la revendication 7, caractérisé en ce que la chambre (13) comporte un verrou (42) pour verrouiller la plaque de support, ce verrou étant relié par une tige de liaison (45) au bras du balai (51), et lorsqu'on abaisse la tige d'écriture (11) sur le disque d'enregistrement (12), le bras s'accroche par un bec de retenue (43) dans une encoche (44) de la plaque de support (15).

9. Tachygraphe selon la revendication 8, caractérisé en ce que l'encoche de retenue est légèrement plus grande que le bec de retenue (43) si bien qu'en position d'accrochage il est possible que la plaque de support (15) exécute de petits mouvements et que le disque d'enregistrement (12) porté par cette plaque puisse effectuer un petit mouvement par rapport aux tiges d'écriture (11), ces petits mouvements servant à réaliser des repères d'ouverture par les tiges d'écriture sur le diagramme d'enregistrement.

10. Tachygraphe selon la revendication 1, caractérisé en ce que la plaque de support (15) est précontrainte dans sa position basculée par un ressort (38).
